# EUROPEAN PATENT SPECIFICATION

(11) **EP 1 394 784 B1**
(45) Date of publication and mention of the grant of the patent: **10.01.2007**
(21) Application number: 03255283.8
(22) Date of filing: 26.08.2003
(51) Int. Cl.: G11B 7/09

(54) **Objective lens driving apparatus used with an optical pickup**
Objektivlinsenantriebsgerät für optisches Abtastgerät
Appareil d'entraînement pour une lentille d'objectif dans une tête de lecture optique

(30) Priority: 24.08.2002 KR 2002050305; 12.08.2003 KR 2003055873
(43) Date of publication of application: 03.03.2004
(73) Proprietor: SAMSUNG ELECTRONICS CO., LTD., Suwon-City, Kyungki-do (KR)
(72) Inventor: Cheong, Young-min, Dobong-gu, Seoul (KR); Kim, Kwang, Suwon-si, Gyeonggi-do (KR); Kim, Dae-hwan, Gangnam-gu, Seoul (KR); Lee, Jin-won 109-204 Sunkyung Apt., Seongnam-si, Gyeonggi-do (KR)
(74) Representative: Clark, David James

(56) References cited:
- EP-A- 0 737 963
- EP-A- 1 394 783
- JP-A- 6 251 405
- JP-A- 10 334 485
- JP-A- 2000 067 444
- JP-A- 2000 149 292
- JP-A- 2000 293 874
- JP-A- 2001 184 683
- JP-A- 2003 173 557
- US-A- 5 303 089
- US-B1- 6 288 984

## Description

The present invention relates to an objective lens driving apparatus for an optical pickup.

In general, disk drives record or reproduce information on or from a disk, a recording medium, by emitting light thereon. The disk drive includes a turntable on which a disk is placed, a spindle motor rotating the turntable, and an optical pickup emitting light on a recording surface of the disk to perform recording and reproduction.

However, the light emitted from the optical pickup must be perpendicularly incident on the recording surface of the disk to form an accurate light spot. If the incident direction of light is inclined, an accurate light spot cannot be formed on the disk. Then, an error is generated in recording and reproduction of data. Thus, in order to form an accurate light spot on a desired track of a disk, the light needs to be perpendicularly incident on the recording surface of the disk. Adjusting the light to be perpendicularly incident on the recording surface of the disk is referred to as tilt adjustment or skew adjustment. Typically, an objective lens driving apparatus controls the position of an objective lens in a focusing direction and a tracking direction so that the focus of light can be accurately formed on a desired track of the recording surface of the disk. However, the objective lens driving apparatus maintains the focus of a light spot by maintaining a constant distance between the objective lens and the recording surface of the disk and controls the light spot to follow a desired track, but it does not directly control an incident angle of the light with respect to the recording surface of the disk. Thus, for more precise recording and reproduction, a function of dynamically adjusting the tilt is needed.

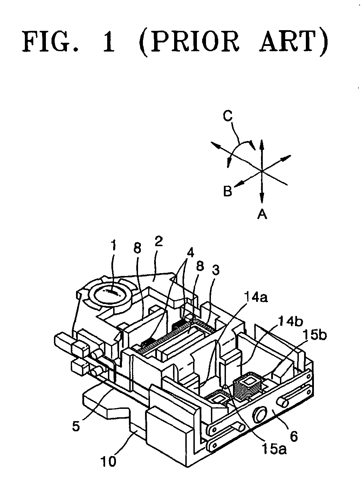

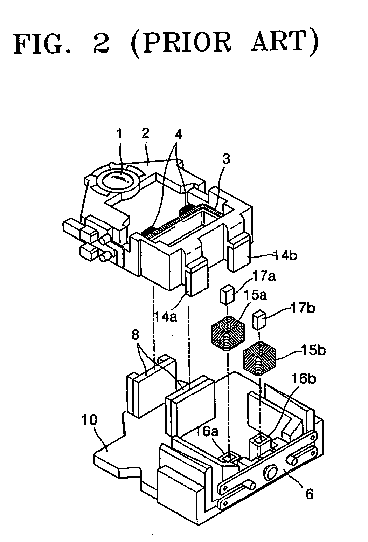

To meet the above need, as shown in Figures 1 and 2, a conventional objective lens driving apparatus of an optical pickup having a dynamic tilt adjustment mechanism has been suggested. The optical pickup shown in the drawing is an objective lens driving mechanism which includes a focus and tracking adjustment mechanism driving a blade 2 where an objective lens 1 is mounted in a focus direction A and a tracking direction B, and a tilt adjustment mechanism driving the blade 2 in a tilt direction C.

The focus and tracking adjustment mechanism has a typical structure including a focus coil 3, a tracking coil 4, and a magnet 8. Thus, the focus and tracking adjustment mechanism generates an electromagnetic force for driving the blade 2 by controlling currents flowing through the focus coil 3 and the tracking coil 4. Reference numeral 5 denotes a wire supporting the blade 2 to move with respect to the holder 6.

The tilt adjustment mechanism includes steel wires 17a and 17b inserted in bosses 16a and 16b on a base 10, tilt coils 15a and 15b wound around the bosses 16a and 16b, and tilt magnets 14a and 14b installed at the blade 2 to face the steel wires 17a and 17b. Thus, the steel wires 17a and 17b are magnetized according to the direction of current flowing in the tilt coils 15a and 15b. The blade 2 is driven in the tilt direction C by the magnetic operation between the magnetized steel wires 17a and 17b and the tilt magnets 14a and 14b.

In the above structure, since constituent elements of the tilt adjustment mechanism, such as the tilt coils 15a and 15b, are installed in an additional space on the base 10, separated from the space for the focus and tracking adjustment mechanism, it is difficult to make a compact objective lens driving apparatus. Also, since the tilt magnets 14a and 14b which are relatively heavy bodies are installed on the blade 2 which is a driving portion, a response speed is reduced due to the heavy weight of the driving portion. Therefore, a structure which can perform accurate lens driving control and tilt control between the disk and the optical pickup is needed.

JP 2000-149292 discloses an objective lens drive device comprising a movable part supported by six pieces of elastic support members and arranged with the objective lens. By arranging four pieces of the conductive elastic support members on the optical disc side in the optical axial direction of the objective lens, and arranging two pieces of the conductive elastic support members on the opposite side a support central position can be brought near to the main point position of the objective lens.

JP 2000-293874 describes a lens holder which holds an object lens which is supported through an elastically supported member so that the object lens can be displaced in a prescribed direction by electro-magnetic driving means. A tilt suppression means is provided with an opposed magnetic pole permanent magnet having opposed magnetic poles in the same face and a coil which faces the opposed magnetic pole permanent magnet.

US 5,303,089 discloses an objective lens drive unit including a magnetic circuit constructed by two outer yokes, two inner yokes, a magnet and an upper yoke. The outer yokes and the inner yokes are integrally formed with an actuator base. A through hole is formed in the upper yoke.

JP 6-251405 discloses the preamble of claim 1.

According to the present invention there is provided an apparatus and method as set forth in the appended claims. Preferred features of the invention will be apparent from the dependent claims, and the description which follows.

The present invention provides an objective lens driving apparatus of an optical pickup which can smoothly control driving of an objective lens without increasing the size of the apparatus or the weight of a driving portion.

In one aspect of the present invention there is provided, an objective lens driving apparatus according to claim 1.

For a better understanding of the invention, and to show how embodiments of the same may be carried into effect, reference will now be made, by way of example, to the accompanying diagrammatic drawings in which:
Figure 1 is a perspective view illustrating a conventional objective lens driving apparatus;
Figure 2 is an exploded perspective view illustrating the objective lens driving apparatus of Figure 1;
Figure 3 is a perspective view illustrating an objective lens driving apparatus according to a preferred embodiment of the present invention;
Figure 4 is an exploded perspective view illustrating the objective lens driving apparatus of Figure 3;
Figure 5 is a view for explaining driving of the objective lens driving apparatus of Figure 3 in a focusing direction;
Figure 6 is a view for explaining driving of the objective lens driving apparatus of Figure 3 in a tilt direction;
Figure 7 is a view for explaining driving of the objective lens driving apparatus of Figure 3 in a tracking direction;
Figure 8 is a perspective view illustrating an example of a coil assembly in the objective lens driving apparatus of Figure 3; and
Figures 9A through 10B are views illustrating examples of a top cover in the objective lens driving apparatus of Figure 3.

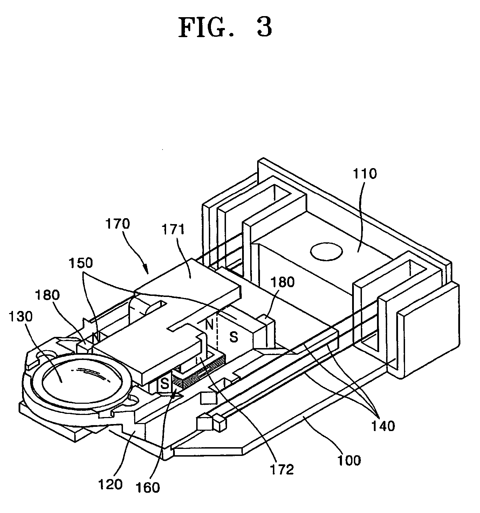

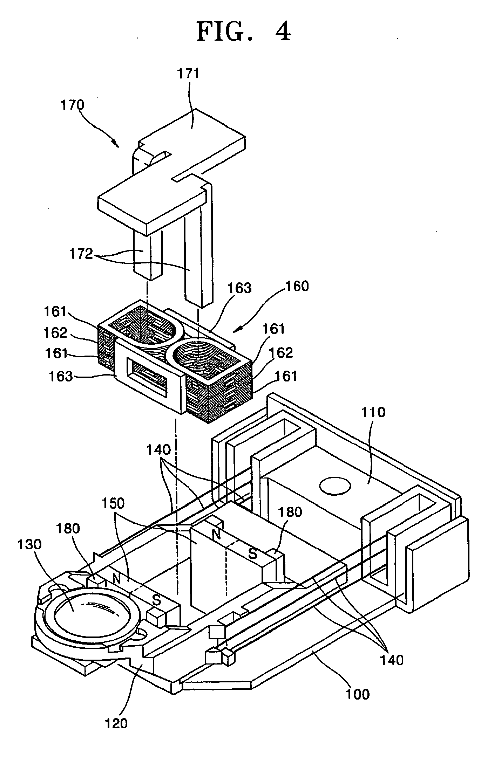

Referring to Figures 3 and 4, a holder 110 is provided on a base 100. A blade 120 on which an objective lens 130 is mounted is supported by a plurality of wires 140 capable of elastically moving with respect to the holder 110. A pair of outer yokes 180 are installed on the base 100 and a pair of magnets 150 are installed at the outer yokes 180 to face each other. A coil assembly 160 is installed at the center portion of weight of the blade 120 and is arranged between the magnets 150.

Each of the magnets 150 is polarized into two poles. The magnets 150 are installed such that the same poles of the magnets 150 face each other. The coil assembly 160 disposed between the magnets 150 includes a tilt coil 162 and a focus coil 161 which are vertically deposited and a tracking coil 163 attached to each of side surfaces of the tilt coil 162 and the focus coil 161 to face the magnets 150. That is, unlike conventional coils which are dispersedly arranged, the coils are incorporated into one coil assembly 160 and arranged between the magnets 150 so that an installation space can be reduced.

Also, a top cover 170 is provided which includes a top yoke 171 magnetically connecting the outer yokes 180 by contacting top ends of the outer yokes 180 from the upper portion of the coil assembly 160, and an inner yoke 172 extending from the top yoke 171 to penetrate the center of the deposited focus coil 161 and the tilt coil 162 and coupled to the base 100. The top cover 170 has a function to concentrate lines of magnetic force generated between the magnets 150 toward the coil assembly 160.

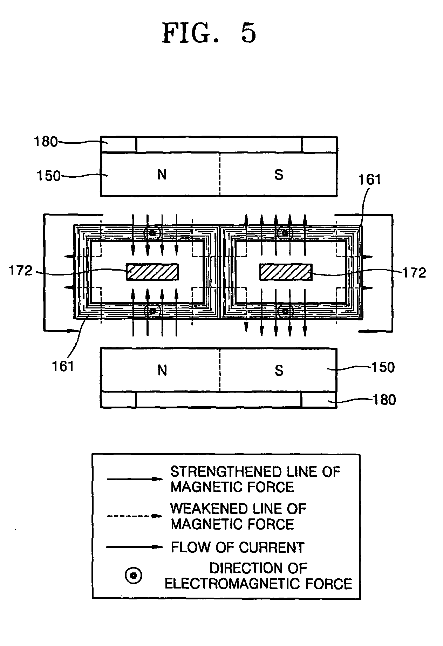

In the above structure, it is assumed that the blade 120 is driven in the focus direction. For example, when current flows through the focus coil 161 as shown in Figure 5, an electromagnetic force is generated in an ascending direction by the interaction with lines of magnetic force generated by the magnets 150. Of course, if the current flows in the opposite direction, the electromagnetic force is generated in the opposite direction. However, in the present invention, an effective length of the focus coil 161 contributing to the generation of the electromagnetic force is double the effective length in the conventional technology. That is, in the conventional structure shown in Figure 1, since only one side of the focus coil 3 is disposed between the magnets 8, the current flowing on the other side is not used for control. In contrast, in the structure according to the present invention, since the entire coil assembly 160 is disposed between the magnets 150 which are polarized into two poles, the front and rear sides of the focus coil 161 facing the respective magnets 150 act as effective coils, as shown in Figure 5. Thus, when the same current is provided, a quite high control sensitivity can be obtained. In addition, since the inner yoke 172 of the top cover 170 concentrates the lines of magnetic force toward the coil assembly 160, the control sensitivity increases further. That is, if the inner yoke 172 is not present, lines of magnetic force traveling from the N pole to the S pole of the respective magnets 150 and lines of magnetic force passing a portion of the focus coil 161 which is not an effective coil are strengthened so that an efficiency in control is lowered. However, when the inner yoke 172 is installed as in the present invention, the lines of magnetic force are concentrated in a direction to pass the effective coil and the other unnecessary components are weakened, so that the control sensitivity is increased further. Thus, although different coils are incorporated into the one coil assembly 160 and arranged in a narrow space, the effective length used for control is greater than that according to the conventional technology.

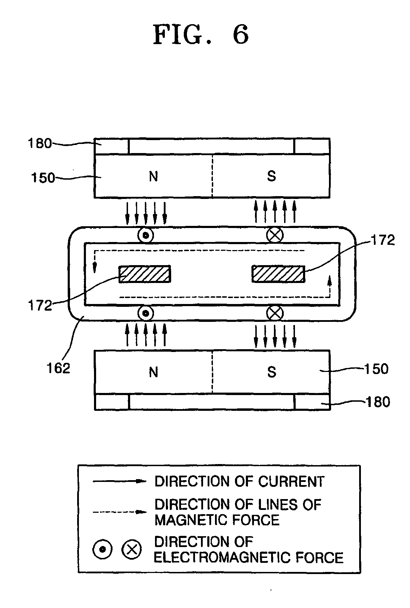

Next, when the blade 120 is driven in the tilt direction, current is supplied to the tilt coil 162 as shown in Figure 6. Then, by the interaction with the magnets 150, electromagnetic forces are generated in an ascending direction at the left side of the drawing and in a descending direction at the right side of the drawing so that the blade 120 is rotated in the tilt direction. To rotate the blade 120 in the opposite direction, current is supplied in the opposite direction. In this case, it can be seen that the effective length of the coil is extended. That is, in the conventional technology, one side surface of each of the tilt coils 15a and 15b is disposed between the magnets 14a and 14b which are magnetic members and the steel wires 17a and 17b, as shown in Figure 2. However, in the present invention, since the front and rear surfaces of the tilt coil 162 facing the magnet 150 act as effective coils, the control sensitivity can be improved.

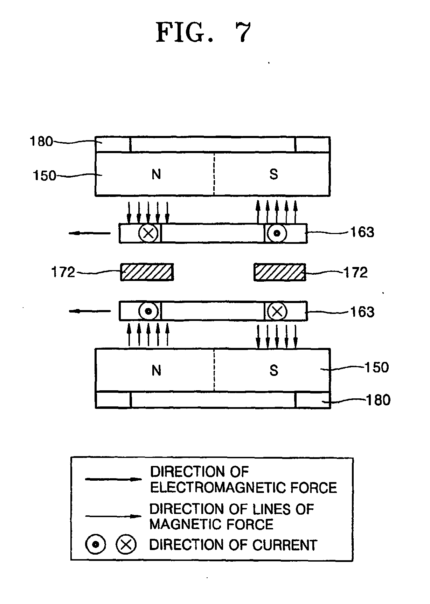

Also, tracking control uses the electromagnetic force generated by the interaction between the current flowing in the tracking coil 163 and the magnet 150. Thus, when current flows in the tracking coil 163 as shown in Figure 7, an electromagnetic force is generated in the left direction on the drawing by the interaction with the magnet 150. If the current flows in the opposite direction, the electromagnetic force is formed in the opposite direction. Thus, when the blade 120 is driven by the electromagnetic force, tracking control is performed. In this case, since the respective vertical surfaces of the tracking coil 163 attached to both sides of the deposited focus coil 161 and the tilt coil 162 are used as an effective coil reacting on the polarized magnet 150, an effective length of the coil extends compared with the conventional technology in which the tracking coil 4 is installed on one side of the focus coil 3, as shown in Figure 1. Thus, the control sensitivity can be improved in the tracking control.

In the present invention, since the focus coil 161, the tilt coil 162, and the tracking coil 163 are incorporated into the coil assembly 160 and arranged in a limited space between the magnets 150, an installation space can be reduced much. Also, although the installation space is limited, en effective length of a coil used for control of the respective coils is extended so that the control sensitivity can be improved.

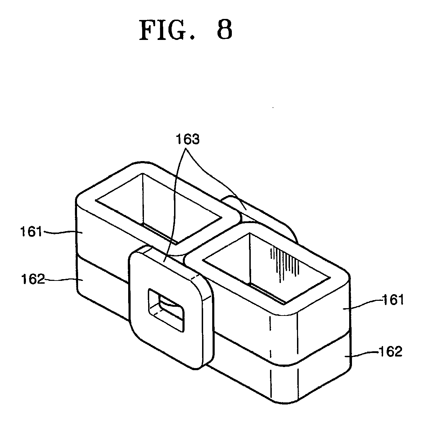

In the above-described preferred embodiment, as the structure of the coil assembly 160, the focus coil 161 is deposited on each of the upper and lower sides of the tilt coil 162 and the tracking coil 163 is attached on both side surfaces thereof. Different from the above structure, as shown in Figure 8, the focus coil 161 can be installed on only one of the upper and lower sides of the tilt coil 162 and the tracking coil 163 is attached to each of both sides thereof.

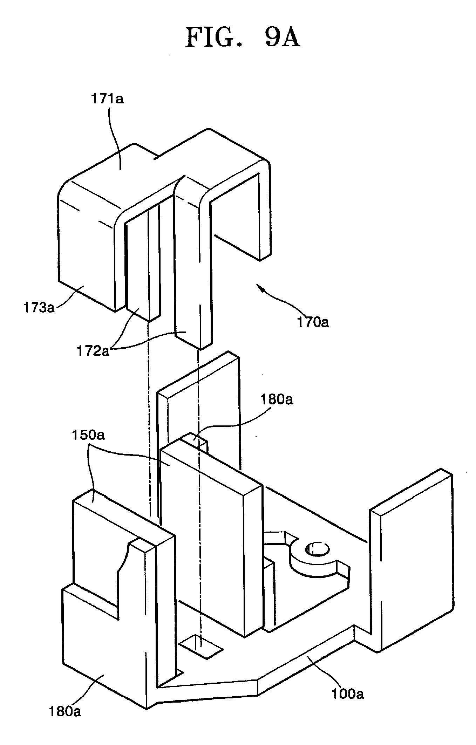

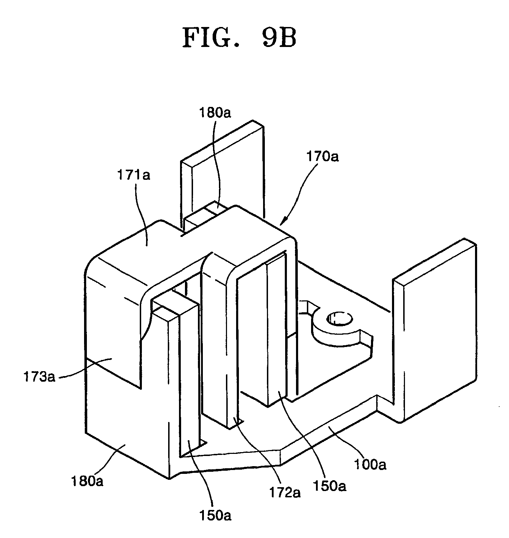

Also, the structure of the top cover 170 can be modified into a variety of shapes as shown in Figures 9A through 10A. That is, although the top cover 170 includes the top yoke 171 and the inner yoke 172 in the preferred embodiment shown in Figure 3, it may further include a partial outer yoke 173a as shown in Figures 9A and 9B. In this case, a first partial outer yoke 180a provided on a base 100a supports a magnet 150a and, when an inner yoke 172a of a top cover 170a is coupled to the base 100a, a second partial outer yoke 173a extending from the top yoke 171a of the top cover 170a is coupled to the first partial outer yoke 180a of the base 100a so as to support the magnet 150a.

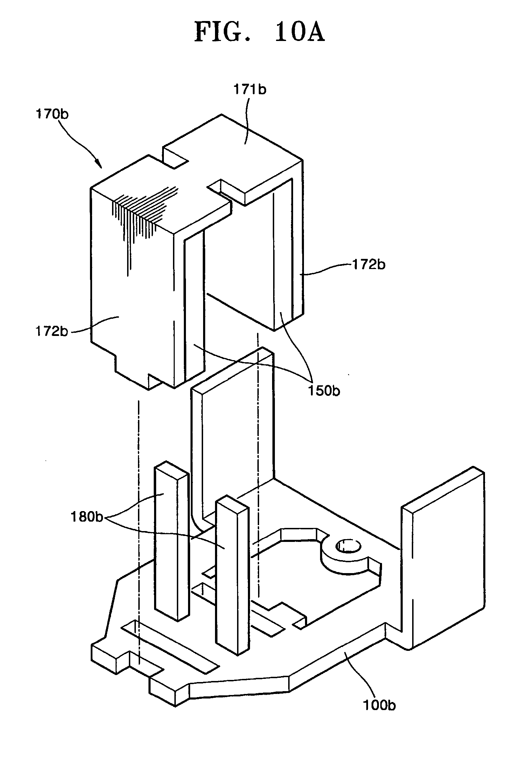

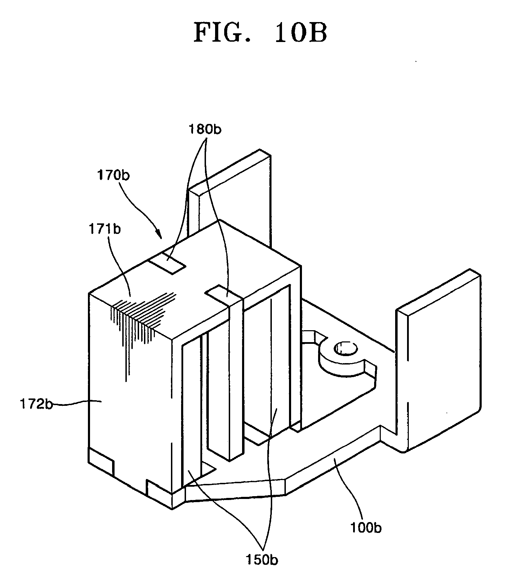

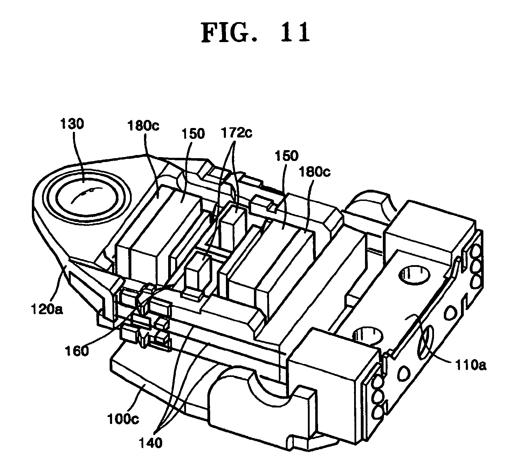

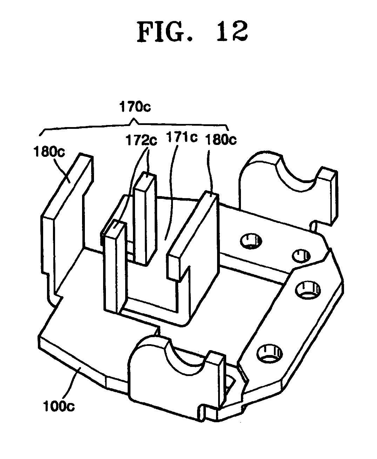

Further, as shown in Figures 10A and 10B, an inner yoke 180b is provided on a base 100b, and a top yoke 171b and an outer yoke 172b to which a magnet 150b is fixed are provided on a top cover 170b, so that the top cover 170b is coupled to the base 100b. In any case, the magnets 150, 150a, and 150b polarized into two poles are adopted so as to produce a very effective control sensitivity together with the coil assembly 160 arranged in the limited small space between a pair of the polarized magnets.

As described with reference to Figures 3 through 8, in the above-described structure, an effective length of a coil used to control respective coils in a limited space is longer, which results in an improved control sensitivity.

As described above, the objective lens driving apparatus of an optical pickup according to the present invention has many advantages.

First, since coils needed to change the position of an objective lens such as a focus coil, a tilt coil, and a tracking coil are incorporated into a single coil assembly and arranged between a pair of magnets, an installation space is small so that the apparatus can be made compact.

Second, the control sensitivity can be improved by extending an effective length of a coil by appropriately matching the magnet polarized into two poles and the coil assembly.

Third, since the respective coils in the coil assembly are arranged to interact with the magnets polarized into two poles, an additional magnet for the tilt coil is not needed unlike in the conventional technology so that the driving portion can be made lightweight.

Although a few preferred embodiments have been shown and described, it will be appreciated by those skilled in the art that various changes and modifications might be made without departing from the scope of the invention, as defined in the appended claims.

## Claims

1. An objective lens driving apparatus for an optical pickup, comprising:
a base (100) ;
a holder (110) provided on the base (100);
a blade (120) on which an objective lens (130) is mounted;
an elastic support body (140) elastically supporting the blade (120) capable of moving with respect to the holder (110);
a pair of magnetic members (150) installed on the base (100) to face each other; and
a coil assembly (160) including a focus coil (161), a tracking coil (163), and a tilt coil (162) and installed at the blade (120) so as to be disposed between the magnetic members (150) wherein in the coil assembly (160), the tilt coil (162) and the focus coil (161) are placed in upper and lower portions of the coil assembly (160) in a focus direction; **characterised by** comprising any one of :
(a) a pair of outer yokes (180) provided on the base (100) to fixedly support the magnetic members (150); and a top cover (170) including an inner yoke (172) fixed to the base (100) by penetrating the focus coil (161) and the tilt coil (162) and a top yoke (171) contacting top ends of the outer yokes (180) from the coil assembly (160);
(b) a top cover (170b) coupled to the base (100) and including a top yoke (171b) disposed above the coil assembly (160) and a pair of outer yokes (172b) provided such that the magnetic members (150) are fixed to both end sides of the top yoke (171b); and an inner yoke (180b) provided on the base (100) to penetrate the focus coil (161) and the tilt coil (162); or
(c) a first partial outer yoke (180a) provided on the base (100) by which part of the magnetic members (150) is fixedly supported; and a top cover (170a) coupled to the base (100) and including an inner yoke (172a) fixed to the base (100) by penetrating the focus coil (161) and the tilt coil (162), a top yoke (171a) disposed above the coil assembly (160), and a second partial outer yoke (173a) extending from the top yoke (171a) and coupled to the first partial outer yoke (180a), forming an entire outer yoke by which the magnetic members (150) are fixedly supported.

2. The apparatus as claimed in claim 1, wherein the tracking coil (163) is attached to a side surface of the tilt and focus coils (161, 162).

3. The apparatus as claimed in any preceding claim, wherein the coil assembly (160) is installed at the center of gravity of the blade (120).

## Patentansprüche

1. Eine Antriebsvorrichtung für eine Objektivlinse für ein optisches Abtastgerät, umfassend:
ein Unterteil (100);
eine Halterung (110), die auf dem Unterteil (100) bereitgestellt wird;
eine Auflageschiene (120), auf der eine Objektivlinse (130) angebracht ist;
einen elastischen Träger (140), der elastisch die Auflageschiene (120) trägt und in der Lage ist, sich mit Bezug auf die Halterung (110) zu bewegen;
ein Paar von magnetischen Elementen (150), die auf dem Unterteil (100) so angebracht sind, dass sie einander gegenüberliegen; und
eine Spulenanordnung (160), die eine Fokussierspule (161), eine Spurspule (163) und eine Neigungsspule (162) einschließt und die an der Auflageschiene (120) so angebracht ist, dass sie zwischen den magnetischen Elementen (150) angeordnet ist, wobei die Spulenanordnung (160), die Neigungsspule (162) und die Fokussierspule (161) in oberen und unteren Teilen der Spulenanordnung (160) in einer Fokussierrichtung positioniert sind, **dadurch gekennzeichnet, dass** sie umfasst:
(a) ein Paar von äußeren Jochen (180), die auf dem Unterteil (100) bereitgestellt sind, so dass sie fest die magnetischen Elemente (150) stützen; und eine obere Abdeckung (170), die ein inneres Joch (172) einschließt, das durch Durchgehen durch die Fokussierspule (161) und die Neigungsspule (162) an dem Unterteil (100) befestigt ist, und ein oberes Joch (171), das obere Enden der äußeren Jochen (180) von der Spulenanordnung (160) kontaktiert;
(b) eine obere Abdeckung (170b), die mit dem Unterteil (100) verbunden ist und ein oberes Joch (171b), das oberhalb der der Spulenanordnung (160) angeordnet ist, und ein Paar von äußeren Jochen (172b), die so bereitgestellt werden, dass die magnetischen Elemente (150) an beiden Endseiten des oberen Jochs (171 b) befestigt sind, einschließt; und ein inneres Joch (180b), das auf dem Unterteil (100) so bereitgestellt wird, dass es durch die Fokussierspule (161) und die Neigungsspule (162) hindurchgeht; oder
(c) ein erstes äußeres Teiljoch (180a), das auf dem Unterteil (100) bereitgestellt wird, wodurch ein Teil der magnetischen Elemente (150) fest gestützt wird; und eine obere Abdeckung (170b), die mit dem Unterteil (100) verbunden ist und ein inneres Joch (172), das durch Durchgehen durch die Fokussierspule (161) und die Neigungsspule (162) an dem Unterteil (100) befestigt ist, und ein oberes Joch (171a), das oberhalb der Spulenanordnung angeordnet ist (160), einschließt, und ein zweites äußeres Teiljoch (173a), das sich von dem oberen Joch (171 a) erstreckt und mit dem ersten äußeren Teiljoch (180a) verbunden ist, wodurch ein ganzes äußeres Joch gebildet wird, durch welches die magnetischen Elemente (150) fest gestützt werden.

2. Die Vorrichtung, wie sie in Anspruch 1 beansprucht ist, in der die Spurspule (163) an einer Seitenfläche der Neigungs- und der Fokussierspule (161, 162) angebracht ist.

3. Die Vorrichtung, wie sie in einem der vorhergehenden Ansprüche beansprucht ist, in der die Spulenanordnung (160) in dem Schwerpunkt der Auflageschiene (120) angebracht ist.

## Revendications

1. Dispositif d'entraînement de lentille d'objectif pour une tête de lecture optique, comportant :
une base (100),
un support (110) agencé sur la base (100),
une lamelle (120) sur laquelle une lentille d'objectif (130) est montée,
un corps de support élastique (140) supportant de manière élastique la lamelle (120) capable de se déplacer par rapport au support (110),
une paire d'éléments magnétiques (150) installés sur la base (100) pour être en vis-à-vis l'un de l'autre, et
un ensemble de bobines (160) comportant une bobine de focalisation (161), une bobine de poursuite (163) et une bobine de pivotement (162) et installé au niveau de la lamelle (120) de manière à être disposé entre les éléments magnétiques (150), dans lequel dans l'ensemble de bobines (160), la bobine de pivotement (162) et la bobine de focalisation (161) sont placées dans des parties supérieure et inférieure de l'ensemble de bobines (160) dans la direction de focalisation, **caractérisé en ce qu'**il comporte un élément quelconque parmi :
(a) une paire de culasses extérieures (180) agencée sur la base (100) pour supporter de manière fixe les éléments magnétiques (150), et un couvercle supérieur (170) incluant une culasse intérieure (172) fixée sur la base (100) en traversant la bobine de focalisation (161) et la bobine de pivotement (162), et une culasse supérieure (171) venant en contact avec les extrémités supérieures des culasses extérieures (180) provenant de l'ensemble de bobines (160),
(b) un couvercle supérieur (170b) couplé à la base (100) et incluant une culasse supérieure (171b) disposée au-dessus de l'ensemble de bobines (160) et une paire de culasses extérieures (172b) agencées de telle sorte que les éléments magnétiques (150) sont fixés sur les deux côtés d'extrémité de la culasse supérieure (171b), et une culasse intérieure (180b) agencée sur la base (100) pour traverser la bobine de focalisation (161) et la bobine de pivotement (162), ou
(c) une première culasse extérieure partielle (180a) agencée sur la base (100) par laquelle une partie des éléments magnétiques (150) est supportée de manière fixe, et un couvercle supérieur (170a) couplé à la base (100) et incluant une culasse intérieure (172a) fixée sur la base (100) en traversant la bobine de focalisation (161) et la bobine de pivotement (162), une culasse supérieure (171a) disposée au-dessus de l'ensemble de bobines (160), et une seconde culasse extérieure partielle (173a) s'étendant à partir de la culasse supérieure (171a) est couplée à la première culasse extérieure partielle (180a), formant une culasse extérieure complète par laquelle les éléments magnétiques sont supportés de manière fixe.

2. Dispositif selon la revendication 1, dans lequel la bobine de poursuite (163) est fixée sur une surface latérale des bobines de pivotement et de focalisation (161, 162).

3. Dispositif selon l'une quelconque des revendications précédentes, dans lequel l'ensemble de bobines (160) est installé au centre de gravité de la lamelle (120).
